# EUROPEAN PATENT APPLICATION

(11) **EP 2 940 640 A1**
(43) Date of publication of application: **04.11.2015**
(21) Application number: 12890690.6
(22) Date of filing: 28.12.2012
(51) Int. Cl.: G06Q 20/32, G06Q 20/24, H04B 5/02

(54) **METHOD FOR CONTROLLING PAYMENT DEVICE FOR SELECTING PAYMENT MEANS**

(30) Priority: 27.12.2012 KR 20120154828
(71) Applicant: Shinhancard Co., Ltd., Seoul 100-709 (KR); KB Kookmincard Co., Ltd., Jongno-gu Seoul 110-719 (KR); Hyundai Card Co., Ltd., Seoul 150-706 (KR); Samsung Card Co., Ltd., Seoul 100-742 (KR); Nonghyup Bank, Seoul 100-151 (KR); Lotte Card Co., Ltd., Seoul 100-778 (KR)
(72) Inventor: PARK, Hae Chul, Seoul 156-030 (KR); KIM, Byungsoo, Seoul 140-040 (KR); LEE, Jeongjin, Seoul 138-220 (KR)
(74) Representative: Thibon, Laurent
(86) International application number: PCT/KR2012/011675
(87) International publication number: WO 2014/104430

(57) **Abstract**

The present invention proposes a method for automatically selecting a payment method using a payment device, in which the payment device and a payment processing terminal automatically determine a mutual payment method so as to thereby conveniently change a mobile payment environment when the payment device and the payment processing terminal approach (or contact) each other, and in which card information with improved security is acquired from a card company server and provided to the payment processing terminal so as to thereby enable mobile transactions with improved security while using existing payment processing networks. To this end, the method of the present invention is performed by a payment processing application installed in the payment device having a display apparatus so as to be driven, and may comprise the steps of: acquiring payment method information, which is supported by the payment device, from an electronic tag when approaching the electronic tag having payment method information recorded thereon; driving a sub-application of a shared payment method matched from the payment method information and the payment method supported by the payment device; and displaying the interface of the sub-application on the display apparatus.

## Description

### Technical Field

The present invention generally relates to a payment device control method for selecting a payment method and, more particularly, to a payment device control method for selecting a payment method, which allows a user to immediately use an available payment method by matching mutually available payment methods between a payment terminal and a payment device, and sequentially displays available payment methods on the payment device depending on the frequency of use thereof, thus improving the usability of payment methods.

### Background Art

A mobile terminal stores card information in a Universal Subscriber Identity Module (USIM) or memory, selects desired card information, and provides the information to a payment terminal, thus enabling mobile payments to be processed.

A mobile terminal may be provided with applications for respective card companies and the corresponding application IDs, and card information may be called and provided to a payment terminal by an application. If multiple pieces of card information and applications are provided in a mobile terminal, a mobile terminal user may execute a desired application and then perform payment using the executed application. In such a payment method, it is difficult for a mobile terminal user to easily find and use desired card information and it is difficult to exactly determine which card information is stored in the mobile terminal and which card information is to be presented to the payment terminal.

In relation to this problem, Korean Patent Application Publication No. 10-2012-0097157 proposes a mobile card management method, which displays card information on a display unit provided in a mobile terminal with reference to an application ID, and allows a user to select and use the displayed card information.

Korean Patent Application Publication No. 10-2012-0097157 enables all pieces of card information to be viewed at first glance and used in that a list of card information stored in the mobile terminal is displayed on the mobile terminal and card information selected by the user from among the pieces of displayed card information is used. Korean Patent Application Publication No. 10-2012-0097157 is advantageous in that payment methods are simultaneously displayed on the display unit to widen the range of user selection, but it is still inconvenient for the user to use the method in that the mobile terminal user must perform mobile transactions by manually and individually selecting card information and in that it is difficult to exactly determine which card information is to be presented to the payment terminal.

### Disclosure

### Technical Problem

An object of the present invention is to provide a payment device control method for selecting a payment method, which allows a payment device and a payment terminal to check payment methods and enables mobile payment to be promptly and conveniently performed in an application (App) environment or a web environment using a user's desired payment method or means.

### Technical Solution

In order to accomplish the above object, the present invention provides a payment device control method for selecting a payment method, the method being performed by a payment application installed and executed on a payment device having a display unit, including when moving in proximity to an electronic tag in which pieces of payment method information supported by a payment terminal are recorded, acquiring payment method information from the electronic tag, executing a sub-application corresponding to a matching shared payment method between the payment method information and payment methods supported by the payment device, and displaying an interface of the sub-application on the display unit.

Further, in order to accomplish the above object, the present invention provides a payment device control method for selecting a payment method, the method being performed by a payment device having a display unit, including when moving in proximity to an electronic tag in which pieces of payment method information supported by a payment terminal are recorded, acquiring payment method information from the electronic tag, providing the payment method information acquired from the electronic tag to a card company server, and acquiring a payment webpage for any one of the pieces of payment method information from the card company server and displaying the payment webpage on the display unit.

### Advantageous Effects

According to the present invention, when a payment device and a payment terminal move in proximity to each other, the payment device may determine payment methods supported by the payment terminal having an electronic tag in which payment methods are recorded, and may process payment depending on a payment method selected by a user from among multiple payment methods supported by the payment terminal.

### Description of Drawings

FIG. 1 is a conceptual diagram showing a payment device control method for selecting a payment method according to an embodiment of the present invention;
FIGS. 2 and 3 are reference diagrams showing a payment device control method for selecting a payment method according to the present invention;
FIG. 4 is a reference diagram showing an example of an execution screen when a payment device downloads and executes a sub-App;
FIG. 5 is a reference diagram showing another example of a sub-App displayed on the display unit of the payment device;
FIG. 6 is a conceptual diagram showing a payment device control method for selecting a payment method based on a web;
FIG. 7 is a flowchart showing a payment device control method for selecting a payment method according to an embodiment of the present invention.

### Best Mode

The term "payment device" described in the present specification may denote a device capable of processing payment in a mobile environment. Devices capable of processing payment in the mobile environment include devices such as a mobile phone, a smart phone, a notebook, a tablet PC, and a Personal Digital Assistant (PDA). In addition, such a device may refer to a portable device among devices that are capable performing wireless communication and are equipped with a financial chip such as a Subscriber Identity Module (SIM) chip or a USIM chip. Here, the payment device must be equipped with a display unit that may be one enabling a touch input.

The term "credit card" described in the present specification may denote not only a credit card itself, but also a mobile terminal that replaces a credit card.

When the payment device described in the present specification is a mobile terminal, the mobile terminal is regarded as being embedded with a chip enabling short-range wireless communication. For example, in the mobile terminal, a Near-Field Communication (NFC) chip or a Bluetooth chip may be embedded. In addition, any type of device may be applied to the mobile terminal as long as it may transmit and receive card information within a distance of several cm or several tens of cm.

Any type of device may be referred to as a "credit card" as long as the device is capable of processing payment and transmitting the track 2 information complying with the ISO/IEC 7813 that is the data standard of a credit card to a payment terminal or a card company server even if a mobile terminal is not equipped with a separate financial chip in a mobile payment environment.

Meanwhile, when the mobile terminal is embedded with an NFC chip, the mobile terminal may perform data communication with the payment terminal via any one of Radio Frequency (RF) interfaces complying with ISO 14443, ISO 14443A, and ISO 18092 standards.

In this case, the payment terminal may be configured such that a separate electronic tag is attached to the main body thereof, wherein the electronic tag may perform wireless data communication with the mobile terminal via any one of RF interfaces complying with ISO 14443, ISO 14443A, and ISO 18092 standards, similarly to the NFC chip of the mobile terminal.

In the present specification, a credit card may denote not only a magnetic credit card and an electronic credit card, but also a mobile terminal that enables payment in a mobile environment, and the meaning of the credit card is not limited to a card-type medium.

An electronic tag described in the present specification may be attached to the payment terminal or may be located near the payment terminal. The electronic tag has payment method information about payment methods supported by the payment terminal, and may provide the payment method information to the payment device at close range (e.g., within a distance of several cm or several tens of cm) when the payment device requests payment method information in proximity to the electronic tag.

The payment terminal described in the present specification may include a type of payment terminal, which reads track 2 information from an existing Magnetic Strip (MS) credit card, a type of payment terminal, which reads track 2 information while coming into contact with an IC chip embedded in an existing electronic credit card, and a type of terminal, which obtains track 2 information from a mobile terminal such as a mobile phone or a smart phone, while performing short-range wireless communication with the mobile terminal.

In the present specification, the payment device is capable of performing short-range wireless communication with the payment terminal. In this case, the payment device may be configured such that a chip having a Near-Field Communication (NFC) function is separately embedded in a mobile terminal or is integrated with a USIM chip.

The term "payment method" described in the present specification may denote an application (App) used in a mobile environment. Here, "App" may denote a sub-App called by a payment App executed on the payment device.

Such a sub-App may denote an App called by the payment App and executed on the payment device, and may be downloaded from a card company server or an App store to the payment device. Therefore, a plurality of sub-Apps may be installed in the storage medium (e.g., flash memory) of the payment device, and the payment App may execute one of the sub-Apps supported by the payment terminal and then process payment.

Hereinafter, the present invention will be described in detail with reference to the attached drawings.

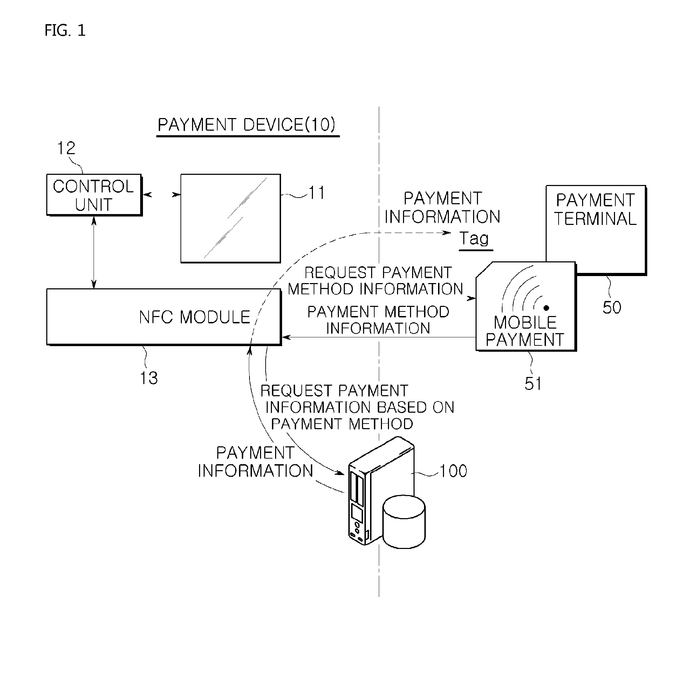

FIG. 1 is a conceptual diagram showing a payment device control method for selecting a payment method according to an embodiment of the present invention.

Referring to FIG. 1, the payment device control method for selecting a payment method according to the embodiment is configured such that, when a payment device 10 equipped with an RF communication chip (e.g., an NFC chip) moves in proximity to or comes into contact with a payment terminal 50 equipped with an electronic tag 51, it requests payment method information from the electronic tag 51 while performing short-range wireless communication (e.g., NFC) with the electronic tag 51. In the present embodiment, payment method information may denote an App used for mobile payment, and may include PayPin, Smart Wallet, an IC card, an App card, etc. in Korea.

The electronic tag 51 has information about payment methods supportable by an affiliated store among the payment methods, that is, payment method information.

For example, the electronic tag 51 may be attached to the payment terminal 50 or located near the payment terminal 50. The electronic tag 51 may support some or all of PayPin, Smart Wallet, an IC card, and an App card, and has information about supported payment methods. When the payment device 10 moves in proximity to the electronic tag 51, it supplies RF power to the electronic tag 51, and the electronic tag 51 may provide the stored payment method information to the payment device 10 using the RF power.

A payment App installed on the payment device 10 may acquire payment method information from the electronic tag 51, and thereafter display sub-Apps supported by the payment terminal 50, among the sub-Apps installed on the payment device 10, on a display unit 11.

On the display unit 11, sub-Apps may be sequentially aligned according to the frequency of use at which the user of the payment device 10 uses the sub-Apps for payment.

For example, assuming that sub-Apps installed on the payment device 10 are A, B, C, and D, and the frequency of use of them for payment by the user is given as the sequence of B, A, D, and C, and the level of payment amounts is given as the sequence of C, D, B, and A,
1) the sub-Apps may be sequentially displayed on the display unit 11 in the sequence of B, A, D, and C based on the frequency of use for payment,
2) the sub-Apps may be sequentially displayed on the display unit 11 in the sequence of C, D, B, and A based on the level of payment amounts, or
3) the sub-Apps may be sequentially displayed on the display unit 11 in the sequence of Korean alphabet letters, or in the sequence of English alphabet letters (A, B, C, ...).

The user of the payment device 10 may select a sub-App to be used for payment, from among the sub-Apps displayed on the display unit 11, based on any one of the types 1) to 3), and the selected sub-App may be executed to provide card information to the payment terminal 50.

The card information at this time may have the form of track 2 information or the form of a One Time Code (OTC), and may be acquired via a card company server 100.

The Track 2 information may denote credit card information complying with an ISP/IEC 7813 standard. The track 2 information is composed of a Primary Account Number (PAN) area, an Expiration Date (ED) area, a Service Code (SC) area, and a Discretionary Data (DD) area. The PAN area may include a Bank Identification Number (BIN) required to identify a card company, a card number, and a Card Verification Code (CVC) information, the ED area may include information about the expiration date of a credit card, the SC area may include service code information, and the DD area may include additional information optionally assigned by a card company. In such track 2 information, the BIN is maintained in an open state, and the remaining area of the PAN may be encrypted. Since the BIN is in an open state, the payment terminal 50 may provide track 2 information to the correct card company server 100.

Meanwhile, the card information may also be implemented in the form of an OTC. The OTC, which is a number optionally issued by the card company server 100, may be used when the payment terminal 50 requests payment from the card company server 100 using any number corresponding to the card number of an actual credit card.

Even in the OTC, the BIN has the same value as that of an actual card number, wherein the OTC may have the format of a "random number sequence corresponding to the BIN of an actual card + actual card number".

The track 2 information and the OTC may be transmitted from the payment device 10 to the payment terminal 50 via short-range wireless communication (e.g., NFC), or may be displayed on the display unit 11 provided in the payment device 10 in the form of a one-dimensional (1D) barcode or a Quick Response (QR) code. The 1D barcode or QR code displayed on the display unit 11 may be read using a barcode reader (not shown) connected to the payment terminal 50.

A control unit 12 provided in the payment device 10 controls the entire operation of the payment device 10, and is configured to execute sub-Apps installed on the payment device 10 or activate the corresponding menu by determining a menu item touched on an executed sub-App. Further, the control unit 12 allows the NFC module 13 to transmit RF power to the electronic tag 51 by controlling an NFC module 13 when the payment App is executed, and acquires payment method information from the electronic tag 51 driven by the RF power.

Further, the control unit 12 may receive payment method information from the electronic tag 51, and thereafter display a sub-App available for the payment device 10 on the display unit 11. The sub-App may be displayed on the display unit 11 based on the above criteria in 1) to 3).

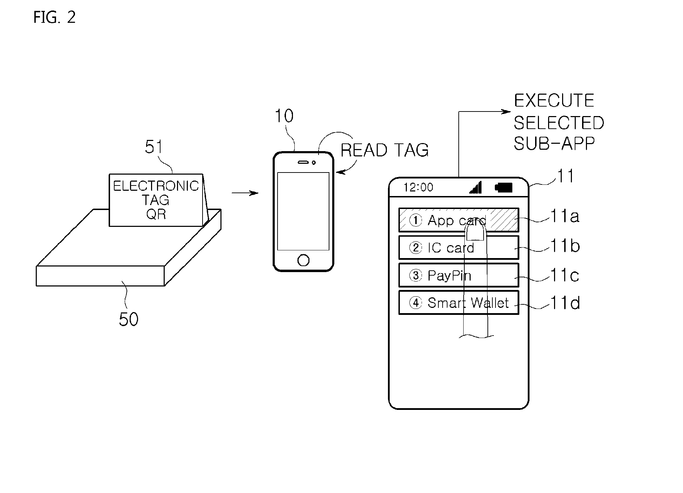

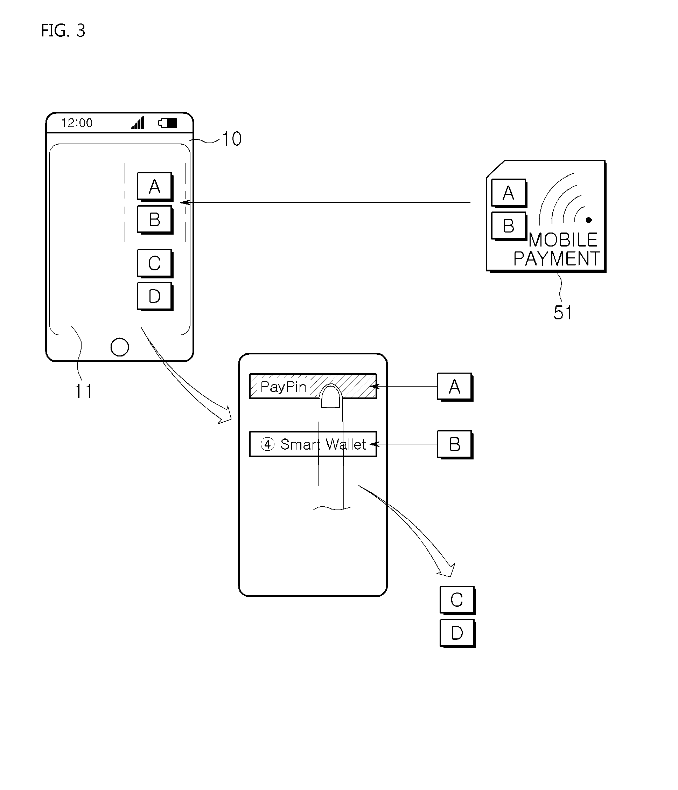

FIGS. 2 and 3 are reference diagrams showing a payment device control method for selecting a payment method according to the present invention.

First, referring to FIG. 2, the payment device control method for selecting a payment method according to an embodiment may be configured such that, when moving in proximity to or coming into contact with the payment terminal 50, the payment device 10 supplies RF power to the electronic tag 51, and such that the electronic tag 51 is driven by the RF power and is capable of providing the stored payment method information to the payment device 10.

The embodiment of FIG. 2 illustrates an App-based payment device control method, and shows a scheme in which the payment App installed on the payment device 10 executes a sub-App corresponding to any one of an App card, an IC card, PayPin, and Smart Wallet, with reference to payment method information, and payment is processed using the executed sub-App.

The payment device 10 may display sub-Apps corresponding to payment method information available for the payment device 10, among pieces of payment method information provided from the electronic tag 51, on the display unit 11.

In this case, the sub-Apps corresponding to payment methods may be displayed on the display unit 11 depending on the methods listed in the following numbers.
4) The sub-Apps may be aligned and displayed in the sequence of Korean alphabet letters or English alphabet letters (a, b, c, ...).
5) The sub-Apps may be aligned and displayed according to the frequency of use of payment methods for payments in the payment device 10.
6) The sub-Apps may be aligned according to the user-defined priority. In this case, common payment methods, between the payment method information acquired from the electronic tag 50 and payment methods available for the payment device 10, that is, only shared payment methods, may be aligned and displayed.
7) The sub-Apps may be aligned and displayed in the sequence of the level of amounts paid by the payment device 10.

In the drawing, an example is illustrated in which a list of shared payment methods is displayed on the display unit 11 in a direction from above to below. The display of the list of shared payment methods is based on the display of list items in the direction from above to below on the display unit 11. Aligning the list of shared payment methods on the display unit may mean that characters, numbers, and images are aligned on the display unit in a direction from the uppermost portion to the lowermost portion of a display.

In FIG. 2, sub-Apps, such as for an App card 11a, an IC card 11b, PayPin 11c, and Smart Wallet 11d, are illustrated, and the illustrated sub-Apps are sub-Apps corresponding to the payment methods supported by the electronic tag 51. Similarly, they correspond to the payment methods supported by the payment device 10. Here, the electronic tag 51 has the form of a QR code or a 1D barcode.

FIG. 3 is a reference diagram showing a way in which pieces of shared payment method information mutually available for the payment device and for the electronic tag are displayed on the display unit.

Referring to FIG. 3, when payment methods supported by the payment device 10 are A, B, C, and D, and payment methods recorded on the electronic tag 51 are A and B, payment methods supported in common by the payment device 10 and by the electronic tag 51, that is, pieces of shared payment method information, may be aligned and displayed on the display unit 11. In FIG. 3, only A and B corresponding to the shared payment methods may be aligned and displayed on the display unit 11. In this state, the user of the payment device 10 may touch and select a desired payment method.

Meanwhile, the payment App installed on the payment device 10 may determine priority and immediately provide payment information to the payment terminal 50 without receiving the user's selection.

For example, when it is assumed that the payment App provides priority to payment method A according to the user's setting, the sub-App corresponding to the payment method A may be executed even if payment methods A and B are present in the payment method information acquired from the electronic tag 51. In this case, the execution screen of the sub-App may not be displayed on the interface of the payment App. The sub-App may omit an execution screen and immediately provide the card information to the payment terminal 50.

Meanwhile, when a sub-App corresponding to a payment method supported by the payment terminal 50 is not present among the sub-Apps installed on the payment device 10, the payment device 10 may request and acquire a sub-App, corresponding to one of payment methods supported by the payment terminal 50, from the card company server 100 (see FIG. 1) or an App server. This will be described with reference to the attached drawings together with FIG. 3.

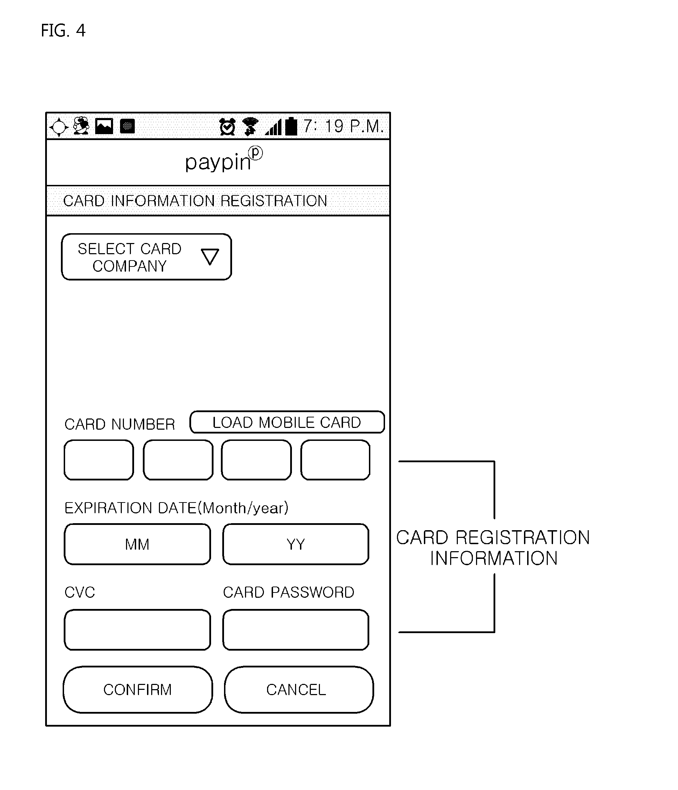

FIG. 4 is a reference diagram showing an example of an execution screen on which the payment device downloads and executes a sub-App.

The shown sub-App shows the interface of a PayPin service that is currently used in Korea, and includes a menu for selecting a card company to be used for payment, a card number input menu, an expiration date input menu, a Card Verification Code (CVC) input menu, and a card password input menu.

PayPin is configured to, when the user of the payment device 10 enters card registration information and subscribes to PayPin, process payment using the information entered by the user of the payment device 10.

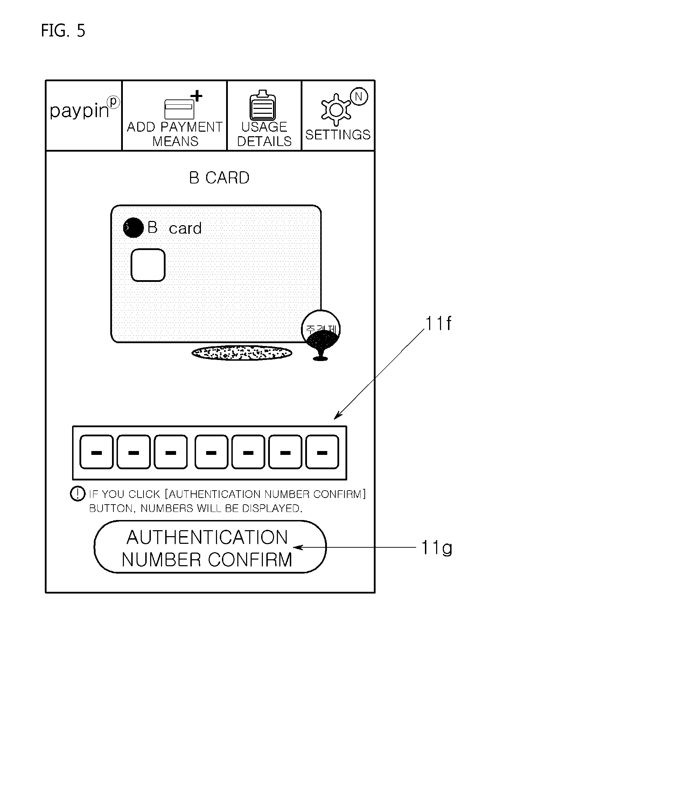

FIG. 5 is a reference diagram showing another example of a sub-App displayed on the display unit of the payment device.

Referring to FIG. 5, when it is assumed that a payment method mutually available for the payment device 10 and for the payment terminal 50 is a PayPin payment method, and a sub-App for the payment method selected by the user on the display unit 11 is also a PayPin method, a PayPin sub-App executed on the payment device 10 requests and receives an authentication number from a card company server (e.g., reference numeral 100 in FIG. 1), and inputs the received authentication number via an authentication number input menu 11f. When an authentication number confirm menu 11g is selected, the authentication number is transmitted to the card company server (e.g., reference numeral 100 in FIG. 1, hereinafter omitted). If the card company server confirms the authentication number, the card information may be transmitted to the payment terminal (e.g. reference numeral 50 in FIG. 1, hereafter omitted) via a wireless communication scheme (NFC scheme), or may be displayed on the display unit 11 in the form of a 1D barcode or QR code and may be read by a barcode reader connected to the payment terminal 50. Here, the card information transmitted based on the QR code, the 1D barcode, or the wireless communication scheme may be one of track 2 information, One Time Code (OTC), and encrypted track 2 information. However, the card information is not limited thereto.

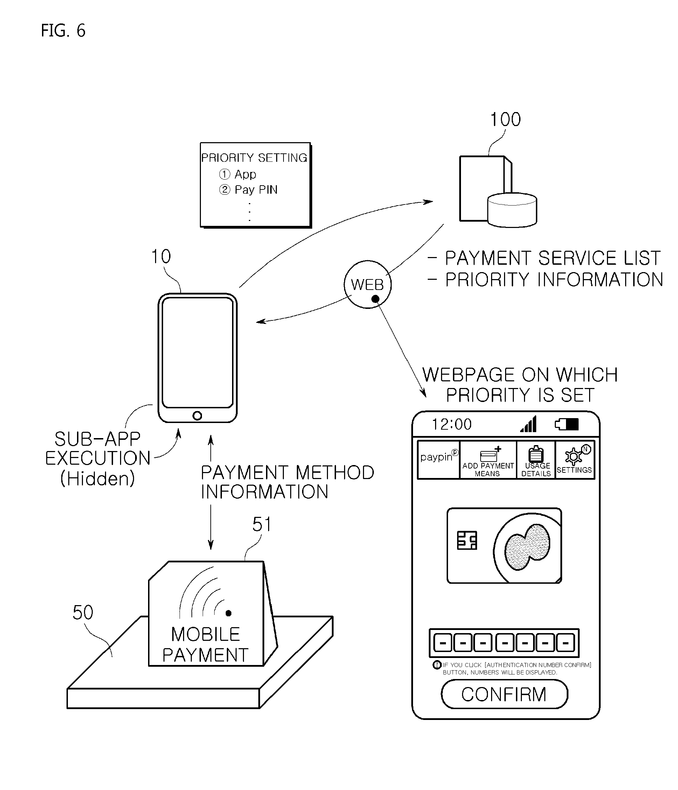

FIG. 6 is a conceptual diagram showing a payment device control method for selecting a payment method based on a web.

Referring to FIG. 6, when moving in proximity to or coming contact with the electronic tag 51, the payment device 10 supplies RF power to the electronic tag 51, and then the electronic tag 51 is driven by the RF power and then provides payment method information to the payment device 10.

The payment method information may denote Apps enabling mobile payment on the payment terminal 50, and may be, for example, PayPin, Smart Wallet, an IC card, an App card, etc. in Korea.

The payment device 10 acquires payment method information from the electronic tag 51, and thereafter accesses the card company server 100 over a wireless network.

The card company server 100 determines whether a payment method corresponding to sub-Apps available for the payment device is present in the payment method information, and may configure a webpage using the sub-Apps supported by the payment terminal 50 among the sub-Apps available for the payment device, as a result of the determination.

The webpage configured by the card company server 100 is generated such that sub-Apps are aligned based on the results totalized by the card company server 100, that is, according to the frequency of use of sub-Apps or in the sequence of sub-Apps having higher payment amounts among sub-Apps, and the generated webpage is transmitted to the payment device 10 in a wireless manner. The payment device 10 may display the generated webpage on the display unit 11 in the form of a typical webpage. The user may select a desired sub-App using the webpage of the payment device 10 and execute a sub-App selected on the webpage from among the stored sub-Apps. At this time, the execution screen of the sub-App is not displayed on the display unit 11. However, when a 1D barcode or QR code to be provided from the sub-App to the payment terminal 50 is represented or when an authentication number is to be provided to the card company server 100, an interface for inputting the authentication number may be displayed on the display unit 11. That is, the execution screen itself of the sub-App is not displayed on the display unit 11.

Meanwhile, the payment device 10 accesses the card company server 100 via a wireless network, and requests priority setting information from the card company server 100. The card company server may provide the payment device 10 with priority setting information in which priorities are previously set by the user of the payment device 10, or priority setting information in which priorities are set based on the frequency of use by the user of the payment device 10 or the level of payment amounts.

On the other hand, the priority setting information may be previously designated by the user of the payment device 10. For example, the user of the payment device 10 may register a desired credit card or a desired sub-App in the card company server 100.

For reference, the payment App described above with reference to FIGS. 2 and 5 may have the functions listed in the following numbers, especially at least one of:
8) the function of driving an NFC chip embedded in the payment device 10 when being selected by the user,
9) the function of referring to the priority setting information of the card company server 100 or assigning priorities to sub-Apps corresponding to pieces of payment method information depending on the frequency of use for payment or the level of payment amounts, and aligning the sub-Apps on the display unit 11 depending on the priority setting information or the assigned priorities,
10) the function of accessing the card company server 100 and requesting a webpage, including the priority setting information, from the card company server 100, and displaying the webpage on the display unit 11,
11) the function of comparing the payment method information acquired from the electronic tag 51 with sub-Apps executable on the payment device 10, and searching for available sub-Apps,
12) the function of acquiring payment method information from the electronic tag 51 and thereafter requesting and acquiring card information suitable for the payment method information from the card company server 100,
13) the function of transmitting the acquired card information to the payment terminal 50 via wireless communication (e.g., NFC), and
14) the function of converting the acquired card information into a 1D barcode or QR code, or acquiring 1D barcode-type card information or QR code information that is converted by the card company server 100, and displaying the 1D barcode-type card information or QR code information on the display unit 11.

In addition to this, the payment App may request and acquire image-type signature information from the card company server 100, and provide it to the payment terminal 50. In this case, the user of the payment device 10 may process mobile payment without providing a separate signature to the payment terminal 50.

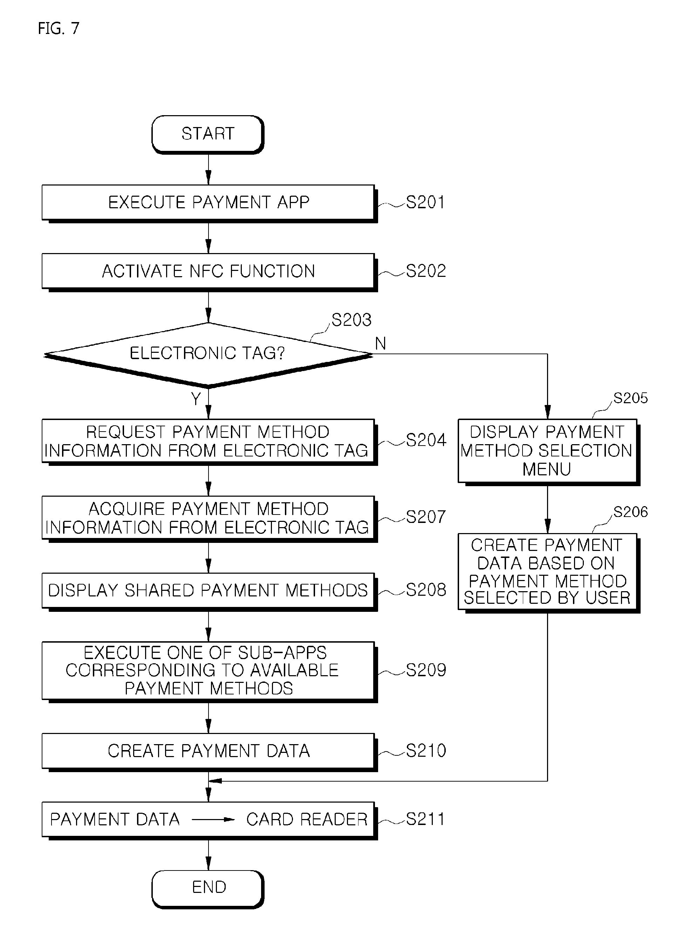

FIG. 7 is a flowchart showing a payment device control method for selecting a payment method according to an embodiment of the present invention.

Referring to FIG. 7, the payment device control method for selecting a payment method according to the embodiment is configured such that the payment device 10 executes a payment App (S201), and if the payment App is executed, the payment App activates a wireless communication (e.g., NFC) function (S202). The payment App may perform one, or two or more of the above-described functions in 8) to 14).

Next, after the NFC function has been activated, the payment App installed on the payment device 10 determines whether an electronic tag 51 is located at close range (e.g. within a distance of several cm or several tens of cm, or in a contact state) (S203). As a result of the determination, if an electronic tag 51 is not present at close range, the payment App may display a payment method selection menu on the display unit 11 to perform a user-defined payment method (S205). Thereafter, the payment App may request and receive payment information based on the payment method selected by the user from the card company server 100 (S206), and provide the payment information to the payment terminal 50 (S211).

In contrast, if the electronic tag 51 is present at close range (e.g., within a distance of several cm or several tens of cm), the payment device 10 may request payment method information from the electronic tag 51 (S204), receive payment method information from the electronic tag 51 (S207), and display the received payment method information on the display unit 11 (S208).

The payment method information displayed on the display unit 11 may be displayed depending on the above methods described in 4) to 7). In addition, all lists of shared payment methods may be displayed on the display unit 11. If there is a single shared payment method, the payment App executes a sub-App corresponding to the unique shared payment method without displaying payment method information on the display unit 11, and the sub-App may provide payment information (e.g., credit card information) to the payment terminal 50. However, the present invention is not limited thereto.

A sub-App corresponding to a matching payment method between payment methods available for the payment device 10 and payment methods available for the payment device 10 may be executed (S209).

Thereafter, the payment App may cause the sub-App corresponding to the shared payment method to create payment information (S210), and may provide the created payment information or payment information acquired by the sub-App through the card company server 100 (e.g., one of track 2 information, OTC, and encrypted track 2 information) to the payment terminal 50 (S211).

### Industrial Applicability

The present invention allows a payment device to easily select a payment method using an electronic tag, and may contribute to the activation of mobile payment business of financial companies, such as a card company and a bank, which process mobile payment.

## Claims

1. A payment device control method for selecting a payment method, the method being performed by a payment application installed and executed on a payment device having a display unit, comprising:
when moving in proximity to an electronic tag in which pieces of payment method information supported by a payment terminal are recorded, acquiring payment method information from the electronic tag;
executing a sub-application corresponding to a matching shared payment method between the payment method information and payment methods supported by the payment device; and
displaying an interface of the sub-application on the display unit.

2. The payment device control method of claim 1, further comprising, after acquiring the payment method information, displaying shared payment methods on the display unit.

3. The payment device control method of claim 2, further comprising, after acquiring the payment method information, executing a sub-application corresponding to a payment method selected by a user from among the shared payment methods.

4. The payment device control method of claim 3, further comprising, after displaying on the display unit, displaying payment information, generated depending on the payment method selected by the user, on the display unit.

5. The payment device control method of claim 4, wherein the payment information is credit card information.

6. The payment device control method of claim 5, wherein the credit card information is track 2 information complying with an ISO/IEC 7813 standard.

7. The payment device control method of claim 1, further comprising, after acquiring the payment method information:
when there are multiple shared payment methods, aligning the shared payment methods in a sequence of a frequency of use thereof, and displaying the shared payment methods on the display unit.

8. The payment device control method of claim 1, wherein, in the shared payment method, an interface of the sub-application is not displayed on the display unit.

9. The payment device control method of claim 1, wherein when there is a single shared payment method, the payment application executes the sub-application and provides payment information to the payment terminal.

10. A payment device control method for selecting a payment method, the method being performed by a payment device having a display unit, comprising:
when moving in proximity to an electronic tag in which pieces of payment method information supported by a payment terminal are recorded, acquiring payment method information from the electronic tag;
providing the payment method information acquired from the electronic tag to a card company server; and
acquiring a payment webpage for any one of the pieces of payment method information from the card company server and displaying the payment webpage on the display unit.

11. The payment device control method of claim 10, wherein the card company server executes an application, corresponding to a matching shared payment method between payment methods available for the payment device and the payment method information acquired from the electronic tag, on the payment device.

12. The payment device control method of claim 11, wherein the application prevents a procedure of execution of the application from being exposed to an interface of the payment application.

13. The payment device control method of claim 10, wherein displaying on the display unit comprises aligning and displaying payment methods depending on a frequency of use for payment for a preset period of time, among the payment methods.

14. The payment device control method of claim 10, wherein displaying on the display unit comprises displaying payment methods that match payment methods available for the electronic tag, among payment methods registered in the card company server.

15. The payment device control method of claim 10, wherein displaying on the display unit comprises sequentially displaying matching payment methods between payment methods available for the electronic tag and payment methods, which are set according to priority of use and are registered in the card company server, according to priority of use.
